# EUROPÄISCHE PATENTSCHRIFT

(11) **EP 2 613 646 B1**
(45) Veröffentlichungstag und Bekanntmachung des Hinweises auf die Patenterteilung: **26.04.2017**
(21) Anmeldenummer: 12737230.8
(22) Anmeldetag: 22.06.2012
(51) Int. Cl.: A23B 4/01, A47J 27/00, A22C 7/00, A23L 5/10, B65D 81/20

(54) **Beschickungsbehälter und Verfahren zur zeitgleichen Hochdruck- und Temperaturbehandlung eines Nahrungsmittels in einem Hochdruckkessel**
Feed tank and method for the simultaneous high-pressure and temperature treatment of a food item in a high-pressure tank
Récipient de chargement et procédé de traitement simultané par haute pression et par voie thermique d'un produit alimentaire dans une cuve haute pression

(30) Priorität: 22.06.2011 DE 102011051269
(43) Veröffentlichungstag der Anmeldung: 17.07.2013
(60) Teilanmeldung: 13191641.3
(73) Patentinhaber: Deutsches Institut für Lebensmitteltechnik e.V., 49610 Quakenbrück (DE); Triton GmbH, 14089 Berlin (DE)
(72) Erfinder: HUKELMANN, Bernhard, 49610 Quakenbrück (DE); TÖPFL, Stefan, 49080 Osnabrück (DE); HEINZ, Volker, 49610 Quakenbrück (DE); KORTSCHACK, Fritz, 14089 Berlin (DE)
(74) Vertreter: Kruspig, Volkmar
(86) Internationale Anmeldenummer: PCT/EP2012/062119
(87) Internationale Veröffentlichungsnummer: WO 2012/175694

(56) Entgegenhaltungen:
- EP-A1- 1 399 194
- EP-A1- 2 289 615
- EP-A2- 0 057 478
- EP-A2- 1 004 779
- DE-A1- 2 648 613
- DE-A1- 4 017 340
- DE-T2- 69 517 415
- GB-A- 1 506 784
- US-A1- 2005 284 171
- US-A1- 2008 099 493
- US-A1- 2008 292 759
- US-A1- 2009 291 174
- US-B1- 6 761 548

## Beschreibung

Die Erfindung betrifft einen Beschickungsbehälter zur Verwendung in einer Hochdruckanlage gemäß Patentanspruch 1 und ein Verfahren zur zeitgleichen Hochdruck- und Temperaturbehandlung eines Nahrungsmittels in einem Hochdruckkessel gemäß Patentanspruch 5, sowie die Verwendung eines solchen Beschickungsbehälters gemäß den Ansprüchen 10 und 11. Die Hochdruckbehandlung von Lebensmitteln sämtlicher Art ist seit langem bekannt und wird zur schonenden Konservierung der Lebensmittel industriell angewendet. Eine Hochdruckbehandlung von Lebensmitteln bei gleichzeitig erhöhten Temperaturen ermöglicht die Sterilisation von Lebensmitteln innerhalb kürzester Zeit.

Für die Fertigung ausgewählter Lebensmittel, z. B. bestimmter Wurst- und Fleischwaren wie Brühwurst, Sülzen und Kochpökelwaren oder auch Tiernahrung ist neben der Hochdruckbehandlung eine thermische Behandlung zur Ausbildung einer gewünschten festen Konsistenz und/oder zur Erzielung eines produkttypischen Geschmackes (z. B. Kochgeschmack) erforderlich.

In der GB 1 506 784 A wird beispielsweise ein Container offenbart, welcher in einer Hochdruckanlage positioniert werden kann. Der Container weist einen Hohlraum auf, welcher zur Aufnahme von Lebensmitteln ausgebildet ist. Außerdem weist der Container eine Temperiervorrichtung auf.

Aus der DE 2648613 A1 ist ein Hochdruckreaktorgefäß für chemische Verfahren bekannt, welches einen Mantel zur Temperatursteuerung aufweist.

Um in einer Hochdruckanlage temperaturgestützte Pasteurisier- und Sterilisationsprozesse, also Hochdruck- und zeitgleiche Temperaturbehandlungen durchführen zu können, müssen die Hochdruckanlagen derartig ausgebildet sein, dass das Druckmedium im Hochdruckkessel und die Wandung der Hochdruckanlage systematisch gekühlt oder geheizt werden können. So werden die Hochdruckkessel beispielsweise mit einem Temperiermantel ausgerüstet, welcher einen Betrieb in einem Temperaturbereich von -10 bis 95 °C gewährleistet. Die Temperierung des Druckmediums erfolgt in derartigen Temperatur/Hochdruckanlagen mittels Hochdruck-Wärmetauscher. Kommerzielle Standardanlagen sind derzeit nicht für gezielte homogene Temperierung ausgelegt. Es ist ersichtlich, dass ein temperaturgestützter bzw. einen temperierunterstützten Pasteurisier- und Sterilisationsprozess nicht in einer Standardhochdruckanlage vorgenommen werden kann, ohne zahlreiche Umbauten an der Anlage vorzunehmen.

In der EP 0 057 478 A2 wird ein beispielhafter Beschickungsbehälter beschrieben. Dieser ist allerdings nicht für die Verwendung in einer Hochdruckanlage geeignet. Aus dem Vorgenannten ist es daher die Aufgabe der vorliegenden Erfindung einen weiterentwickelten Beschickungsbehälter zur Verwendung in einer Hochdruckanlage sowie ein Verfahren zur gleichzeitigen Hochdruck- und Temperaturbehandlung von Nahrungsmitteln in einer Standardhochdruckanlage anzugeben, sodass in einer Standardhochdruckanlage oben genannte kombinierte Hochdruck- und Temperaturanwendung an Lebensmitteln bzw. Nahrungsmitteln vorgenommen werden kann, ohne die Standardhochdruckanlage umbauen zu müssen.

Ein gattungsgemäßer Beschickungsbehälter sowie ein Verfahren zur zeitgleichen Hochdruck- und Temperaturbehandlung eines Nahrungsmittels in einem Hochdruckkessel sind auch aus den Dokumenten US 2008/099493 A1 und US 2009/291174 A1 bekannt. Die Lösung der Aufgabe erfolgt durch einen in einer Hochdruckanlage zu verwendenden Beschickungsbehälter gemäß der Lehre nach Patentanspruch 1 sowie durch ein Verfahren zur zeitgleichen Hochdruck- und Temperaturbehandlung eines Nahrungsmittels in einem Hochdruckkessel gemäß der Lehre nach Patentanspruch 5, wobei die Unteransprüche mindestens zweckmäßige Ausgestaltungen und Weiterbildungen darstellen.

Der erfindungsgemäße Beschickungsbehälter umfasst einen Hohlraum zur Aufnahme von Lebensmitteln, eine Wandung sowie eine Temperiervorrichtung. Ebenso können Vorrichtungen zur sicheren Trennung des Behandlungsgutes von dem Druckmedium im Hochdruckkessel vorgesehen sein. Der Beschickungsbehälter weist vorzugsweise eine dem Hochdruckkessel der Hochdruckanlage angepasste Kontur auf, sodass der Beschickungsbehälter in den Hochdruckkessel gegeben werden kann. Die Kontur bezieht sich in diesem Fall auf den Umriss, die Form und die Größe des Beschickungsbehälters, welcher mit zu behandelnden Lebensmitteln gefüllt in die Standardhochdruckanlage gegeben wird. Denkbar sind beispielsweise zylindrisch oder halbzylindrisch geformte Beschickungsbehälter.

Der Beschickungsbehälter ist erfindungsgemäß mehrwandig und in besonders bevorzugter Ausführungsform doppelwandig mit einem Wandungszwischenraum ausgebildet, wobei der Wandungszwischenraum mit Temperiermedium befüllt ist. So kann zum Beispiel ein Ventil oder eine Klappe außerhalb des Wandungszwischenraumes vorgesehen sein, über das ein Temperiermedium eingefüllt werden kann.

Das Temperiermedium befindet sich nach dem Befüllvorgang also im Wandungszwischenraum. Das Temperiermedium kann vor dem Befüllvorgang bereits eine ausgewählte Temperatur aufweisen, sodass eine Vortemperierung bzgl. des Temperiermediums notwendig ist. Als Temperiermedium kommen beispielsweise Wasser, Öl, Salz, Parrafin, Glycerin, Sole, Salzlauge, PCM und weitere derartige Stoffe in Frage. PCM steht in diesem Fall für Phase Change Material bzw. Phasenübergangsmaterial. Des Weiteren sind Latentwärmespeicher in Form von mikroskopisch kleinen Polymerkugeln bekannt, die in Ihrem Inneren ein Speichermedium aus Wachs enthalten. Auch ein derartiges Temperiermedium bzw. Isoliermedium kann in den Wandungszwischenraum eingebracht werden. Das Prinzip des Latentwärmespeichers funktioniert auch in umgekehrte Richtung, z. B. auf der Basis einer Natriumacetat-Lösung. Durch Verwendung eines derartigen Temperiermediums kann der Beschickungsbehälter bzw. der ausgebildete Isoliermantel zur Stabilisierung niedriger Temperaturen, auch im Minusbereich, eingesetzt werden. Das Isoliermedium bzw. das Temperiermedium muss allerdings unter Hochdruck keine oder nur eine geringe adiabatische Temperaturerhöhung erfahren.

Andererseits sollte auch in Betracht gezogen werden, dass das Temperiermedium im Beschickungsbehälter eine Flüssigkeit sein kann, die Ihrerseits unter Druck einen hohen Temperaturanstieg aufweist. Hierbei handelt es sich beispielsweise um Ethanol.

Das Temperiermedium wird je nach Anwendungserfordernis ausgewählt. Sofern das Lebensmittel im Beschickungsbehälter erwärmt werden soll, können beispielsweise vortemperiertes Wasser, Öl, Glycerin, PCM usw. zum Einsatz kommen. Zur Kühlung des Lebensmittels kann Sole, flüssiger Stickstoff o. ä. verwendet werden.

Während das Erreichen des gewünschten Drucks wegen des annähernd verzögerungsfreien Impulstransports in den üblichen druckübertragenden Medien (z. B. Wasser) sehr zügig möglich ist und durch entsprechende Pumpenleistung oder Druckspeichersysteme leicht realisiert werden kann, ist die korrekte Einstellung der Behandlungstemperatur nur bei Kenntnis der durch die Kompressionswärme im Produkt erzeugten Temperaturerhöhung möglich. Das Ausmaß dieser Erwärmung ist zunächst abhängig von den thermophysikalischen Eigenschaften: spezifische Wärmekapazität, Dichte und spezifische Expansivität. Die während der Kompression von Flüssigkeiten verrichtete Arbeit kann mittels der Gleichung W= ½ · κ · V₀ · Δp² abgeschätzt werden, wobei W=Kompressionsenergie, κ=Kompressionsenergie, V₀=Ausgangsvolumen und Δp=Druckerhöhung.

Bei reinem Wasser steigt die Fluidtemperatur während der Kompression abhängig von der Ausgangstemperatur um ca. 2,5 bis 5°C pro 100 MPa an. In Gegenwart von gelösten Feststoffen oder emulgiertem Fett bzw. bei Ölen fällt diese Erwärmung noch höher aus. In Tabelle 1 sind die Temperaturerhöhungen ausgewählter Substanzen ausgehend von einer Temperatur von 25°C wiedergegeben.

**Tabelle 1: Temperaturerhöhung ΔT bei adiabater Kompression ausgewählter Substanzen ausgehend von 25°C**

| **Substanz** | **ΔT [κ/100MPa]** |
|---|---|
| Wasser | ∼ 3,0 |
| Orangensaft | ∼ 3,0 |
| Milch 2%-Fett | ∼ 3,0 |
| Lachs | ∼ 3,2 |
| Hühnerfett | ∼ 4,5 |
| Rinderfett | ∼ 6,3 |
| Olivenöl | 8,7 - < 6,3 |
| Sojaöl | 9,1 - < 6,2 |

Die Auswahl eines geeigneten druckübertragenden Mediums, des Temperiermediums sowie des Materials des Beschickungsbehälters ermöglicht daher eine Nutzung unterschiedlicher kompressionsbedingter Erwärmungen. Zusätzlich sind Wärmetransportvorgänge zu berücksichtigen, da meist ein Wärmeübertrag über die Produktverpackung bzw. die Behälterwandung nicht ausgeschlossen werden kann. Als Transportgrößen sind die Wärmeleitfähigkeit sowie die dynamische Viskosität von Bedeutung. Da diese Größen von Druck und Temperatur abhängig sind, ist die Berechnung des Temperaturanstiegs nur mit Kenntnis über die funktionalen Zusammenhänge möglich. Neben einer kompressionsbedingten Erwärmung können insbesondere druckinduziert auftretende Phasenwechsel zur Temperierung technischer Systeme eingesetzt werden. Die dabei abhängig von der Richtung des Phasenwechsels aufgenommene oder freiwerdende Phasenwechselenthalpie liegt üblicherweise um mehrere Größenordnungen höher als die spezifische Wärmekapazität.

Eine ideale adiabatische Zustandsänderung setzt voraus, dass das System in dem die Zustandsänderung statt findet, perfekt gegen Wärmeströme jeglicher Form isoliert ist. Unter realistischen Bedingungen ist eine vollständige Wärmeisolation nicht erreichbar, durch einen gut isolierten Beschickungsbehälter jedoch annäherungsweise möglich.

Bestimmte Stoffe, wie z. B. Öle oder Glycerine weisen unter Druckeinwirkung einen deutlich höheren Temperaturanstieg auf, als z. B. Wasser. Dieser Umstand oder auch eine höhere Ausgangstemperatur des Temperiermediums gewährleisten, dass sich das Temperaturgefälle des Druckmediums im Hochdruckkessel nicht negativ auf das Behandlungsgut durch die Druckbehandlung auswirkt. Das Temperiermedium wirkt wie ein sehr guter Isolator, welcher verhindert, dass die im Behandlungsgut durch die Druckbehandlung entstehende adiabatische Temperaturerhöhung ungleichmäßig ausfällt und dadurch zu Produktionsfehlern führt. Generell erreicht ein fetthaltiges Behandlungsgut unter Druck eine höhere Temperatur als andere Stoffe wie z. B. Wasser. Dies ist bei der Wahl der Ausgangstemperatur des Temperiermediums zu berücksichtigen.

Neben der Vortemperierung des Temperiermediums ist es auch möglich, den Beschickungsbehälter mit einer Temperiervorrichtung in der Nähe der Wandung zu versehen, um ein Erwärmen oder Kühlen der Wandung des Beschickungsbehälters im befüllten Zustand zu ermöglichen.

Die Wandung des Beschickungsbehälters kann in mehrwandiger Ausführung mittels einer Temperiervorrichtung geheizt oder gekühlt werden, sodass das Behandlungsgut während der Hochdruckbehandlung auch bei deutlich abweichender Temperatur der Hochdruckkesselwandung und des im Hochdruckkessel befindlichen Druckmediums ausreichend erwärmt oder gekühlt bleibt.

Hierfür kann, wie bereits erwähnt, eine Vorrichtung zur Temperierung des Temperiermediums vorgesehen sein, um die im Wandungszwischenraum befindlichen Materialien neben der durch den Hochdruck induzierten adiabatischen Erwärmung zusätzlich zu temperieren bzw. zu verflüssigen oder die Wandung des Beschickungsbehälters direkt zu temperieren. Es sind sowohl in den Beschickungsbehälter integrierte als auch von außen wirkende Vorrichtungen denkbar. Als Beispiel werden induktive Erwärmungsvorrichtungen und auch der mögliche Durchlauf durch eine Temperierzone erwähnt.

Während der Hochdruckbehandlung erfolgt eine adiabatische Erwärmung des Behandlungsgutes und, sofern vorhanden, des Druckmediums im Beschickungsbehälter und der im Wandungszwischenraum befindlichen drucksensiblen Materialien, sodass hierdurch die gewünschte Temperatur im Behandlungsgut und dem Beschickungsbehälter erreicht wird. Das Druckmedium im Beschickungsbehälter ist beispielsweise zusätzlich eingebrachtes Wasser oder in mechanischer Form ein Kolben.

Zur Druck- und Temperaturbehandlung von Behandlungsgut/Nahrungsmitteln, das den Hohlraum des Beschickungsbehälters vollständig ausfüllt, wie z. B. Leberwurstmasse, wird auf ein Druckmedium im Beschickungsbehälter verzichtet, da dieses Behandlungsgut nach der Druckbehandlung steril in dafür vorgesehene Behälter, Dosen, Kunststoffbecher usw. abgefüllt und verschlossen werden kann.

Produkte, welcher keiner besonderen Temperaturbeeinflussung unterzogen werden, wie z. B. streichfähige Rohwurstmasse, können ebenfalls in dem dafür vorgesehenen Beschickungsbehälter ohne Druckmedium druckbehandelt und anschließend unter sterilen Bedingungen in kleine Behälter, Dosen, SB-Verpackungen etc. gefüllt werden. Vorzugsweise weist der Beschickungsbehälter eine zusätzliche oder alleinige Temperiervorrichtung zur Einflussnahme auf die Wandung auf, welche beispielsweise durch in die Wandung eingebrachte elektrische Heizelemente realisierbar ist. Die Anordnung der Heizelemente kann auch in anderen Bauteilen bzw. Orten des Beschickungsbehälters erfolgen. Gemäß der Erfindung weist der Beschickungsbehälter mindestens einen elektrischen Kontakt zur Stromversorgung der Temperiervorrichtung auf, wobei der elektrische Kontakt derart in dem Beschickungsbehälter angeordnet sein kann, dass erst bei in Kontakt kommen mit einem im Hochdruckkessel befindlichen Gegenkontakt der Stromkreis geschlossen ist und die Temperiervorrichtung mit Strom versorgt wird. Der elektrische Kontakt kann beispielsweise an einer Entnahmeöffnung des Beschickungsbehälters angeordnet sein. Die Verschlussvorrichtung der Entnahmeöffnung kann beispielsweise als Schraubverschluss realisiert sein, welcher sich an einem der Enden des vorzugsweise länglich ausgebildeten Beschickungsbehälters befindet. Die in den Beschickungsbehälter eingebauten elektrischen Kontakte sind so angeordnet, dass die im Hohlraum befindlichen Rohstoffe, Halbfertigwaren oder Fertigwaren lückenlos vom Strom durchflossen werden und gegebenenfalls im Zusammenspiel mit den vorgeschlagenen Heizelementen mittels Ohmscher Erhitzung im Beschickungsbehälter vor oder während der Hochdruckbehandlung temperiert werden.

In einem Hochdruckkessel können mehrere der Beschreibung entsprechende Beschickungsbehälter gestapelt werden, die befüllt mit einem Nahrungsmittel z. B. einem Aufschnittrohstoff (wie z. B. Brühwurst, Pasteten, Kochpökelware), nach der kombinierten Wärme- und Hochdruckbehandlung und anschließender Kühlung des behandelten Halbfertigproduktes im Beschickungsbehälter, in seiner Funktion als Kartusche, auf eine Aufschnittmaschine deponiert, eine keimfreie Weiterverarbeitung der Aufschnittscheiben ermöglichen.

Die Standardhochdruckanlage verfügt über ein Druckerzeugersystem, mittels dessen der Druck des Druckmediums im Hochdruckkessel erzeugt und eingestellt werden kann. Das Druckerzeugersystem umfasst beispielsweise mehrere Nieder- und Hochdruckpumpen für das Druckmedium. Zusätzlich kann ein Behälter für das Druckmedium, welches bspw. Wasser ist, vorgesehen sein.

Befinden sich im Hochdruckkessel mehrere Beschickungsbehälter, so werden die in den Behältern befindlichen Nahrungsmitteln gleichzeitig einer kombinierten Temperatur- und Hochdruckbehandlung unterzogen. Auch die Verwendung mehrerer Hochdruckbehälter bzw. Hochdruckkessel, die kaskadenförmig angeordnet sind ist denkbar. Es können also mehrere Druckbehälter zur Aufnahme von dem Druckmedium in abnehmender Druckhöhe und zur Nutzung des in den Druckbehältern gespeicherten Drucks für den Druckaufbau im Hochdruckkessel verwendet werden.

Nach der Behandlung werden der oder die Behälter aus dem Hochdruckkessel entnommen, wobei hierzu ein Druckabbau im Hochdruckkessel vorangehen muss. Dieser Druckabbau muss gesteuert werden, da ein zu schneller Druckabbau zu unerwünschten Veränderungen und Schäden am Produkt führt. Das Aussehen, der Geschmack sowie die Haltbarkeit des behandelten Nahrungsmittels können unter einem zu schnellem Druckabbau leiden. Beispielsweise können durch eine schnelle Expansion komprimierter, verflüssigter Gase frostbrandähnliche Erscheinungen am Nahrungsmittel oder Schäden an der Verpackungshülle auftreten.

Vorrichtungsseitig ist ein Steuerungsmittel vorgesehen, mittels dessen der Druckabbau bzw. die Rate des Druckabbaus im Hochdruckkessel gesteuert ist. Um den Druckabbau im Hochdruckkessel zu steuern ist eine Stelleinrichtung bzw. ein Ventil mit Druckübersetzer vorgesehen. Der Druckübersetzer ist eine Freikolbenmaschine zur Änderung von einem ersten Arbeitsdruck zu einem zweiten Arbeitsdruck.

Der kritische Moment während des Druckabbaus in einem Hochdruckbehälter ist der Zeitpunkt des Phasenübergangs des Gases von der flüssigen in die gasförmige Form. Dieser Übergang erfolgt bei rund 600 bar. Folglich kann der Druckabbau über 1.000 bar gefahrlos sehr schnell in beispielsweise kaskadierende kleinen Druckbehälter erfolgen, um diesen Druck später für den erneuten Druckaufbau im Hochdruckbehälter zu nutzen. Erst ab ca. 1.000 bar muss darauf geachtet werden, dass der Druckabbau verlangsamt wird, um mögliche Schädigungen des Behandlungsgutes wie z. B. Frostbranderscheinungen und etwaiger Beschädigungen von Verpackungsmaterialen, welche durch explosionsartige Belastungen auf das Packgut entstehen, zu verhindern.

Der restliche Druck kann auf die Sekundärseite eines Druckübersetzers gegeben werden und durch Verringerung des Drucks auf der Primärseite des Druckübersetzers gefahrlos für den langsameren Restdruckabbau im Hochdruckbehälter sorgen. Durch eine derartige Anordnung erfolgt nur eine unwesentliche Zeitverzögerung während des Druckabbaus, welcher sich jedoch durch die Verwendung des gespeicherten Drucks nicht verzögernd auf den Gesamtzyklus auswirkt.

Wird versucht, z. B. Wasser aus dem Hochdruckkessel gezielt über einen Druckminderer bzw. ein Ventil abzulassen, kann dies wegen der hohen Druchflussgeschwindigkeiten zur Zerstörung des Druckminderers führen. Um diese Hürde zu umgehen, ist es möglich, in einer ersten Phase des Druckabbaus im Hochdruckkessel, den Druckabbau derart zu steuern, dass z. B. bis zu einer Druckhöhe von 20 MPa das Druckmedium, bspw. Wasser, in einen Auffangkessel bzw. Auffangbehälter ohne Druckminderer zu leiten.

Das benötigte Volumen des Auffangbehälters, der dem Druck von über 20 MPa standhalten muss, wird über die Menge des während des Druckaufbaus zugeführten Wassers im Hochdruckkessel ermittelt und wird bspw. durch Zu- oder Abführung von Bestandswasser vor der Entleerung des Druckkessel eingestellt.

Bei einem Druckgleichgewicht zwischen dem Hochdruckkessel und dem Auffangbehälter von ca. 20 MPa ist es problemlos möglich, die Systeme zu trennen und den Druck im Hochdruckkessel über ein Ventil langsam, unter Umgehung von spontan entstehenden Ausdehnungen von Stoffen in behandelten verpackten Lebensmitteln, abzubauen. Die gespeicherte Energie im Auffangbehälter wird bspw. zum erneuten Befüllen eines Hochdruckkessels genutzt. Auch die Energie des in der zweiten Phase des Druckabbaus, nämlich den langsam zu erfolgenden Druckabbaus kann dadurch zurückgewonnen werden, dass über ein System Druckluft erzeugt wird. Diese Druckluft kann z. B. zum direkten Antrieb von Turbinen, Kühlmaschinen oder Hebevorrichtungen genutzt werden. Auch eine Umwandlung in Strom ist denkbar.

Der erwähnte Auffangbehälter kann auch als Pufferspeicher bezeichnet werden, welcher wie bereits beschrieben, während des Druckabbaus des Hochdruckkessels zur Aufnahme des Druckmediums des Hochdruckkessels dient. Es erfolgt eine Einstellung eines Gleichgewichts zum Hochdruckkessel auf einem niedrigen Druckniveau, sodass der Restdruck im Hochdruckkessel unter Vermeidung des spontanen Übergangs flüssiger Medien in den gasförmigen Zustand erfolgen kann und die damit verbundene Schädigung von Behandlungs- und/oder Packmaterial vermieden wird. Durch Volumenmessung des eingebrachten Druckmediums während des Druckaufbaus ist ermittelbar, welches Volumen im Pufferspeicher bzw. Auffangbehälter durch Vorbefüllung mit bspw. Wasser bereitgestellt werden muss, um das gewünschte Gleichgewicht auf niedrigem Druckniveau zu erreichen.

Zusammenfassend können also Teile der eingebrachten Hochdruckenergie zur Vorspannung in einem zweiten Hochdruckkessel oder auch für den erneuten Druckaufbau desselben Hochdruckkessels im Sinne einer Rückgewinnung verwendet werden. Über Ventile können die einzelnen Hochdruckkessel geschaltet und angesteuert werden.

Über in dem Beschickungsbehälter eingebettete Kontakte kann das Behandlungsgut mittels gepulster elektrischer Felder (Pulsed Electric Fields, PEF) behandelt werden. Die PEF-Technologie (Elektroporation) kann angewendet werden, um Membrane von Zellen durchlässig zu machen. Dies kann abhängig von der Intensität reversibel oder irreversibel erfolgen. Die Elektroporation erfolgt dabei durch den Aufbau eines elektrischen Feldes im Mikrosekundenbereich. Als Dosisparameter zur Steuerung der Behandlungsintensität kann der spezifische Energieeintrag eingesetzt werden. Dieser wird in Abhängigkeit der Produkteigenschaften und dem Produktvolumen etwa durch Anpassung der Impulsrate vorgegeben.

Mit Hilfe des Verfahrens ist es z. B. möglich, Mikroorganismen bei niedrigen Temperaturen zu inaktivieren und somit die Haltbarkeit von Lebensmitteln zu verlängern. Der Vorteil gegenüber der konventionellen Pasteurisierung liegt darin, dass die ernährungsphysiologischen und funktionellen Eigenschaften, aber auch die Frische der Lebensmittel weitestgehend erhalten werden. Durch die Elektroporation ist es möglich, im ersten Behandlungsschritt Mikroorganismen zu stressen und diese im zweiten Schritt mittels Temperatur und/oder Hochdruck zu inaktivieren.

Die Temperatur des Temperiermediums im Beschickungsbehälter sollte den jeweiligen Erfordernissen und den zu erzielenden Produktergebnisses bzw. dem anzuwendenden Verfahren angepasst werden.

Letztendlich können die Temperaturen im Beschickungsbehälter derart gesteuert werden, um exakt einzustellen, welchen Temperaturen das Behandlungsgut bzw. das Lebensmittel während der Druckbehandlung im Hohlraum ausgesetzt wird. Nachfolgend sind vier bevorzugte Beispiele genannt: Es handelt sich zum einen um die Temperatur des Temperiermediums und zum anderen um die Temperatur der Wandung. Das Temperiermedium kann durch Vorerwärmen oder eine Heiz- bzw. Kühlvorrichtung, welche im Bereich der Mehrfachwandung eingebracht ist bzgl. seiner Temperatur eingestellt werden. Das Temperiermedium kann also auch als Temperiervorrichtung bezeichnet werden. Die Wandung kann entweder durch die in die Wandung eingebrachte Temperiervorrichtung bzw. durch die im Wandungszwischenraum befindlichen drucksensiblen Materialien, welche eine vom Behandlungsgut abweichende adiabatische Erwärmung zum Behandlungsgut aufweisen können, temperiert werden. Des Weiteren ist es möglich die Temperatur des Nahrungsmittels derart zu beeinflussen, dass es bereits vortemperiert in den Beschickungsbehälter gegeben wird.

Die Vorerwärmung bzw. Vortemperierung des Behandlungsgutes kann außerdem im Beschickungsbehälter mit dem im Beschickungsbehälter befindlichen Druck- bzw. Temperiermedium erfolgen. In einem derartigen Fall haben die Wandung, das Druck- bzw. Temperiermedium und das Behandlungsgut die gleichen Eingangstemperaturen.

Bei einem fetthaltigen Behandlungsgut und Wasser als Druck- bzw. Temperiermedium entsteht wegen der unterschiedlichen adiabatischen Erwärmung ein Temperaturgefälle, welches zu einer geringeren Temperierung des Lebensmittels im Randbereich während der Hochdruckbehandlung führt. Um eine gleichmäßige Temperierung des Behandlungsgutes zu erreichen, müssen sowohl das im Beschickungsbehälter und/oder Hochdruckkessel befindliche Druckmedium als auch die Beschickungsbehälterwandung wärmer sein als das Behandlungsgut, sodass unerwünschte Temperaturgradienten innerhalb des Behandlungsgutes bzw. Lebensmittels vermieden werden. Sofern Produkte während der Druckbehandlung gekühlt werden müssen, dürfen sich das Druckmedium und das Temperiermedium bzw. die Wandung des Beschickungsbehälters nicht stärker erwärmen als das Behandlungsgut.

In einer möglichen Ausführungsform des erfindungsgemäßen Beschickungsbehälters sind die Wandungen starr ausgeführt, sodass sie befüllt, verschlossen und hermetisch abgedichtet werden können. Der im Hochdruckkessel aufgebaute Druck kann auf das im Behälter befindliche Lebensmittel übertragen werden. Im gesamten Druckbehälter herrscht der gleiche isostatische Druck vor.

Da das Behandlungsgut bzw. das Nahrungsmittel nicht mit dem Druckmedium im Hochdruckkessel, also dem außerhalb des Beschickungsbehälters befindlichen Druckmedium, in Kontakt kommt, kann das Lebensmittel unverpackt in den Hohlraum des Beschickungsbehälters gegeben werden. Flüssige und pastöse Produkte oder Rohstoffe, wie z. B. Fleisch können in einem erfindungsgemäßen Beschickungsbehälter mit Hochdruck behandelt und gleichzeitig temperiert werden.

Vorzugsweise weist der Beschickungsbehälter eine Isolierung auf, um bei Kontakt eines zu temperierenden Lebensmittels mit der Wandung des Behälters keine unerwünschte Temperaturzuführung oder Temperaturabführung hervorzurufen. Die Isolierung kann beispielsweise durch eine auf der äußeren Oberfläche des Beschickungsbehälters aufgetragene Isolierschicht ausgebildet sein. Des Weiteren ist es denkbar, bei Ausbildung einer Mehrfach- bzw. Doppelwandung in den Wandungszwischenraum ein Isoliermedium zu geben. Die Isolierung bzw. das Isoliermedium befindet sich also gemäß weiterer Ausführungsform der Erfindung im Wandungszwischenraum. Mit Hilfe eines Isoliermantels können kombinierte Hochdruck-/Wärmebehandlungen auch bei gekühlten oder gefrorenen Produkten durchgeführt werden.

Ein Isoliermantel kann bspw. dadurch gebildet werden, dass um einen mit z. B. vorerwärmten Füllgut und vortemperierten Wasser befüllten Schlauchbeutel herum ein doppelwandiger flexibler Isoliermantel gelegt ist, der in den Zwischenräumen zwischen den einzelnen Lagen mit dem bereits beschriebenen Temperiermedium befüllt wird. Die Zwischenraumbefüllung des Isoliermantel mit dem Temperiermedium kann vor, während oder nach dem Einbringen des befüllten oder zu befüllenden Schlauchbeutels erfolgen. Demnach ist es möglich, einen Schlauchbeutel bzw. eine Schlauchfolie mit zu behandelnden Gut zu befüllen und an beiden Enden zu versiegeln. Anschließend wird der befüllte Schlauchbeutel in einen Gewebeschlauch gegeben, welcher bspw. aus mehreren Gewebelagen bestehen kann. In den Zwischenraum kann, wie bereits erwähnt, das Temperiermedium gegeben werden. Im Kopf- und Bodenbereich der Schläuche können druckstabile Kunststoffplatten angeordnet sein, um hierdurch eine Deformation der befüllten Schläuche beim Einbringer in die Hochdruckanlage zu verhindern.

In einer weiteren Ausführungsform der Erfindung kann der Isoliermantel aus einem geschäumten Kunststoff gefertigt sein, dessen Hohlstellen mit Öl, PCB, Glycerin, Wasser oder einem anderem Material gefüllt ist. Dieser Isoliermantel kann direkt oder umhüllt von einem Gewebe zur Isolierung genutzt werden.

Es ist möglich, starr bzw. fest ausgebildete Beschickungsbehälter dafür einzusetzen, dass das Lebensmittel nach der Hochdruck- und/oder Temperaturbehandlung unter Sterilbedingungen in Behälter, Packungen oder dergleichen gefüllt werden kann. Zur Anwendung bei pastösen Halb- oder Fertigprodukten kann der Beschickungsbehälter vorzugsweise derart konstruiert sein, dass die Wandung stabil ist und sich auch unter Einwirkung des Hochdruckes in seinem Querschnitt nicht verändert.

Zur Übertragung des Hochdruckes auf das Lebensmittel weist ein hierfür konstruierter Beschickungsbehälter eine Vorrichtung auf, die wie ein Kolben bzw. Verdichtungskolben, das Lebensmittel nach außen, also zum Hochdruckkessel hin, und nach innen abdichtet, wobei der Verdichtungskolben durch den im Hochdruckkessel erzeugten Druck zeitweise in den Beschickungsbehälter also in den Hohlraum zur Aufnahme des Lebensmittels gedrückt wird und dadurch der Inhalt des Beschickungsbehälterhohlraumes zusammengedrückt wird. Das Lebensmittel wird durch den Verdichtungskolben im vorzugsweise länglich gestalteten Beschickungsbehälter zusammengedrückt. Es ist sichergestellt, dass das Lebensmittel dem gleichen hydrostatischen Druck unterliegt, wie er im Hochdruckkessel vorliegt. Aufgrund des vorherrschenden Druckgleichgewichtes zwischen dem Beschickungsbehälterinhaltes, also dem Lebensmittel, und dem Inneren des Hochdruckkessels, sind keine aufwendigen Abdichtvorrichtungen wie Dichtkolben erforderlich, um das Behandlungsgut vom Druckmedium des Hochdruckkessels sicher zu trennen.

In einer weitergebildeten Ausführungsform der Erfindung kann der Verdichtungskolben so konstruiert sein, dass er nach der Hochdruck- und/oder Temperaturbehandlung zum Ausstoßen des Behandlungsgutes und zum Befüllen von Dosen, Verpackungen oder dergleichen genutzt wird. Vorzugsweise weist der Beschickungsbehälter an der dem Verdichtungskolben gegenüberliegenden Seite eine Entnahme- bzw. Befüllungsöffnung auf, sodass der Verdichtungskolben das behandelte Lebensmittel auf die gegenüberliegende Seite drückt und das Lebensmittel durch die genannte Öffnung entnommen werden kann.

Die Entnahme- bzw. Befüllungsöffnungen können mit Füllvorrichtungen verbunden werden, die eine aseptische Weiterverarbeitung des Behandlungsgutes ermöglichen. In diesen nachgeordneten, gekapselten Vorrichtungen kann das Behandlungsgut aufgelockert, mit dem Inhalt anderer gleich konstruierter Beschickungsbehälter vermischt, auf eine vorgegebene Körnung usw. gebracht werden, ohne dass eine Rekontamination vor einem evtl. Füllvorgang erfolgt.

Zweckmäßigerweise weist der Beschickungsbehälter zwei Entnahme- bzw. Befüllungsöffnungen auf, welche gegenüberliegend angeordnet sein können. Der Verdichtungskolben kann in eine Entnahme- bzw. Befüllungsöffnung integriert konstruiert sein. Des Weiteren ist es denkbar den Beschickungsbehälter mit zwei Verdichtungskolben zu versehen. Die vorzugsweise gegenüberliegend ausgebildeten Verdichtungskolben komprimieren das Behandlungsgut somit von zwei Seiten bzw. symmetrisch.

Am Einlass des Verdichtungskolbens in den Hohlraum des Beschickungsbehälters kann vorzugsweise mindestens ein elektrischer Kontakt ausgebildet sein, welcher die Temperiervorrichtung bzw. Heizelemente, bei geschlossenem Stromkreis entsprechend versorgt. Für den Anwendungsfall der ohmschen Erhitzung dient das Lebensmittel als elektrischer Widerstand der durch die Leitung von elektrischem Strom erwärmt wird. Für die PEF Behandlung stellen die elektrischen Kontakte die Pole für die Applizierung der Spannungsimpulse dar.

Ebenso ist es denkbar bei Ausbildung einer starren Wandung lediglich die Verschlussmöglichkeiten der Entnahme- bzw. Befüllungsöffnungen derart elastisch auszubilden, dass der Druck des Hochdruckkessels auf das im Hohlraum befindliche Lebensmittel übertragen werden kann. Sofern zwei Entnahmeöffnungen ausgebildet sind, ist es möglich lediglich eine der Öffnungen mit einem elastischen Verschluss auszubilden.

Zur keimfreien Entleerung des Beschickungsbehälters nach der Behandlung des Lebensmittels ist der Behälter derart konstruiert, dass dieser mit einer Füll- oder Dosiervorrichtung für den aseptischen Füllvorgang fest verbunden werden kann. Es ist denkbar, an zumindest einer Entnahmeöffnung einen Flansch zur keimfreien Entnahme auszubilden, sodass eine Misch-, Zerkleinerungs-, Füll-, Würfel- oder Dosiervorrichtung angedockt werden kann. Beispielsweise ist es möglich den Flansch mit einem Außengewinde auszubilden, sodass die Füll- oder Dosiervorrichtung angeschraubt werden kann.

In einer alternativen Ausführungsform kann die Wandung des Beschickungsbehälters flexibel ausgebildet sein. Dies kann sowohl bei einer Einfach- als auch bei einer Mehrfachwandung vorgesehen sein. Die flexible Ausführung eignet sich vor allem zur Behandlung von Lebensmitteln, welche in Längsrichtung nicht komprimiert bzw. gestaucht werden dürfen, um zum Beispiel das Brechen von Tierknochen (Kasseler mit Knochen) oder das Stauchen von SB-Packungen zu vermeiden. Der Hochdruck wird hierbei über die flexible Wandung auf das Lebensmittel übertragen. Ein derartiger Beschickungsbehälter ist sowohl dazu geeignet verpackte Produkte als auch lose Ware bzw. Halbfertigware wie z. B. Kasseler aufzunehmen und einer Hochdruck- und/oder Temperaturbehandlung unterziehen zu lassen.

Mit dem erfindungsgemäßen Beschickungsbehälter ist es möglich in einer Standardhochdruckanlage, welche nicht explizit für die thermische Behandlung konstruiert wurde, auch temperaturgeführte Pasteurisier- und Sterilisationsprozesse vorzunehmen. Weder das Druckmedium noch die Wand der Standardhochdruckanlagen werden bei der Verwendung der beschriebenen unisolierten oder isolierten Beschickungsbehältern stärker aufgeheizt als bisher üblich, sodass sämtliche Behandlungsschritte wie Kalt- und Warmbehandlung in einer Standardhochdruckanlage in beliebiger Reihenfolge durchgeführt werden können. Es entfällt ein systematisches Kühlen oder Aufheizen des im Hochdruckkessel befindlichen Druckmediums und der Wand der Hochdruckanlage.

Der erfindungsgemäße Beschickungsbehälter soll nachstehend anhand von Ausführungsbeispielen sowie unter Zuhilfenahme von Figuren näher erläutert werden.

Hierbei zeigen:
- Fig. 1: einen Beschickungsbehälter,
- Fig. 2: einen Beschickungsbehälter mit Verdichtungskolben und
- Fig. 3: einen Beschickungsbehälter mit flexibler Wandung.

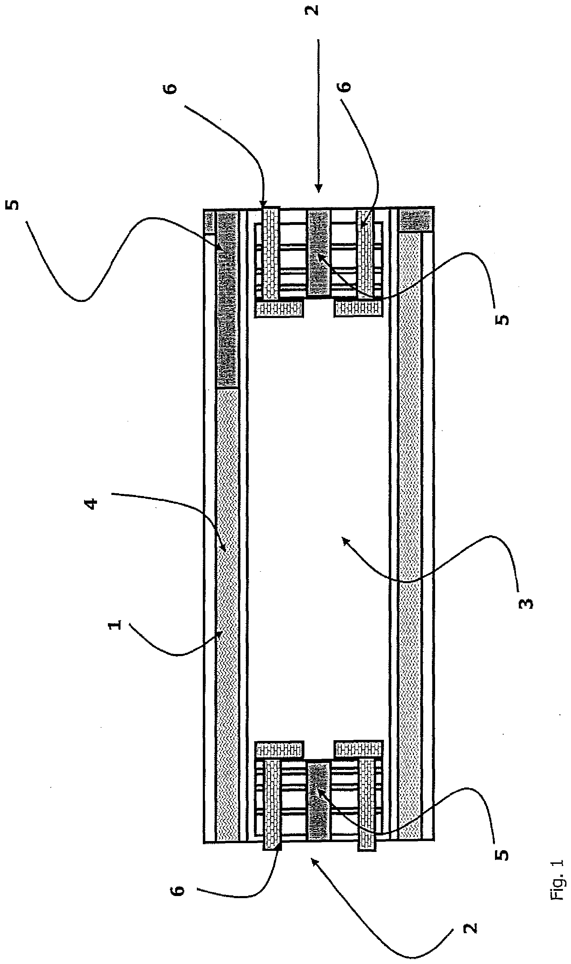

In Fig. 1 wird zunächst die Grundkonstruktion eines Beschickungsbehälters dargestellt. Eine Wandung 1 und die Entnahmeöffnungen 2 definieren einen Hohlraum 3 zur Aufnahme des zu behandelnden Lebensmittels. Im dargestellten Ausführungsbeispiel ist eine Mehrfachwandung und explizit eine Doppelwandung mit Wandungszwischenraum 4 ausgebildet. In diesem Zwischenraum befindet sich ein Temperiermedium. Bei dem Temperiermedium kann es sich um Wasser, Öl, Salz, Paraffin, Sole, PCM oder Salzlake handeln. Das Temperiermedium kann bereits vorgewärmt bzw. gekühlt in den Wandungszwischenraum 4 gegeben werden. Dies kann über ein Ventil erfolgen. Abhängig vom zu behandelnden Lebensmittel kann das im Wandungszwischenraum befindliche Medium auch als Isoliermedium einer Isolierung des Beschickungsbehälters dienen.

Außerdem ist eine weitere Temperiervorrichtung 5 vorgesehen, welche zum einen zur Temperierung des Temperiermediums und zum anderen zur direkten Temperierung der Wandung 1 ausgebildet sein kann. Die Ausbildung von einer weiteren Temperiervorrichtung 5 im Bereich der Entnahmeöffnung 2 ist ebenfalls vorgesehen.

Im Bereich der zwei Entnahmeöffnungen 2 sind jeweils elektrische Kontakte 6 vorgesehen, welche bei in Kontakt kommen mit im Hochdruckkessel oder separat außerhalb des Hochdruckkessels angebrachten Gegenkontakten einen Stromkreis schließen und die Temperiervorrichtungen 5 bzw. Elektroporationsvorrichtung mit Strom versorgen. Ergänzend sei darauf hingewiesen, dass die Kontakte im Beschickungsbehälter vollflächig wirken, um sicherzustellen, dass alle Teile des Behandlungsgutes vom Strom durchflossen werden.

Wie der Figur entnommen werden kann, weist der Beschickungsbehälter eine längliche Geometrie auf, welche jedoch auch andere, an den Hochdruckkessel der Standardhochdruckanlage räumlichen Gegebenheiten angepasst sein kann. Die Entnahmeöffnungen 2 befinden sich an den in Längsrichtung gegenüberliegenden Enden des Beschickungsbehälters. Die zu den Entnahmeöffnungen zugehörigen Schließvorrichtungen können u. a. als Schraubdeckel ausgeführt sein, welche beispielweise eine elastische Membran aufweisen können. Das zu behandelnde Lebensmittel wird vor der Behandlung über die Öffnungen in den Hohlraum 3 eingebracht und nach der Behandlung über die gleichen Öffnungen entfernt.

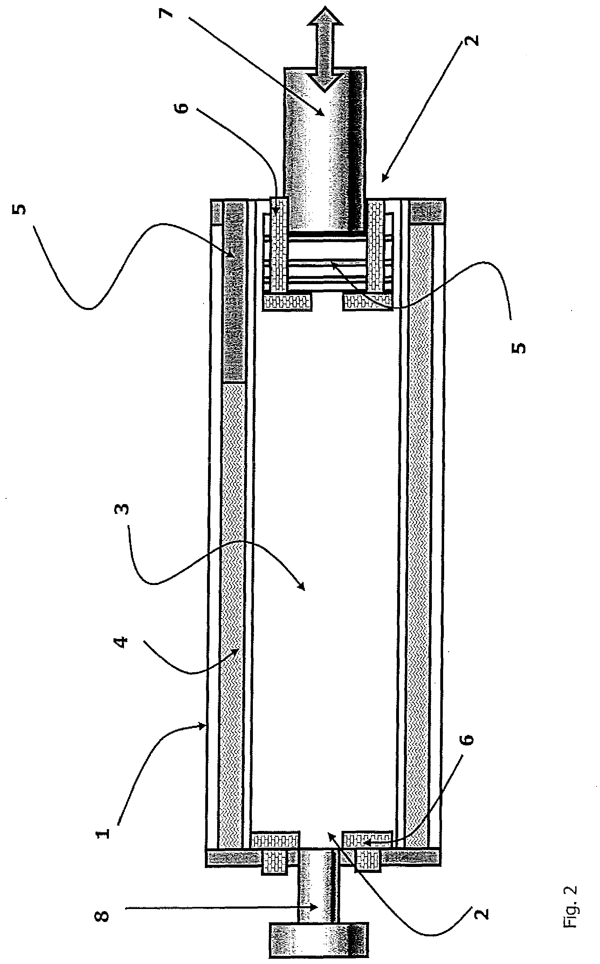

In Fig. 2 ist ein Beschickungsbehälter mit Verdichtungskolben 7 abgebildet. Der Verdichtungskolben ist in eine Entnahmeöffnung integriert und bildet den Verschluss derselbigen wobei sich der Kolben am gegenüberliegenden Ende einer weiteren Entnahmeöffnung 2 befindet. Diese Ausführungsform des Beschickungsbehälters eignet sich besonders gut für die Behandlung von pastösen Halb- oder Fertigprodukten. Diese verändern während der Druck- und Temperaturbehandlung nicht ihren Querschnitt und werden lediglich in Längsrichtung aufgrund der Druckbeaufschlagung des Verdichtungskolbens komprimiert.

Das pastöse Lebensmittel wird zunächst über die beiden Entnahmeöffnungen 2 in den Hohlraum 3 gegeben. Anschließend wird die eine Entnahmeöffnung mit einem Verschlussstopfen 8 versehen während in die gegenüberliegende Entnahmeöffnung der Kolben 7 eingeführt wird. An beiden Enden des Beschickungsbehälters befinden sich elektrische Kontakte 6 wobei im Bereich des Verdichtungskolbens des Weiteren eine Temperiervorrichtung 5 vorgesehen ist.

Es folgt die Hochdruck- und Temperaturbehandlung, wobei der Verdichtungskolben in Längsrichtung in den Hohlraum 3 gedrückt wird, wodurch das darin befindliche Behandlungsgut komprimiert wird. Nach Beendigung der Behandlungsschritte wird der Verschlussstopfen 8 entfernt, sodass das behandelte Lebensmittel mit Hilfe des Verdichtungskolbens 7 über diese Entnahmeöffnung entfernt werden kann. Der Verdichtungskolben weist daher vorzugweise eine Länge auf, welche mindestens dem Abstand zwischen beiden Entnahmeöffnungen 2 entspricht, sodass das Behandlungsgut aufgrund des durch den Verdichtungskolben 7 ausgeübten Druckes durch die Entnahmeöffnung, welche gegenüber des Verdichtungskolben 7 liegt, ausgestoßen wird.

Zur keimfreien Entleerung des Beschickungsbehälters nach der Behandlung des Lebensmittels bzw. Nahrungsmittels ist der Behälter derart konstruiert, dass dieser mit einer Füll- oder Dosiervorrichtung fest verbunden werden kann. An der ursprünglich mit einem Verschlussstopfen 8 versehenen Entnahmeöffnung 2 ist daher eine Koppelungsvorrichtung wie z. B. ein Flansch mit Außengewinde ausgebildet (nicht dargestellt), sodass die Füll-, Meng-, Zerkleinerungs- oder Dosiervorrichtung verbunden bzw. angeschraubt werden kann.

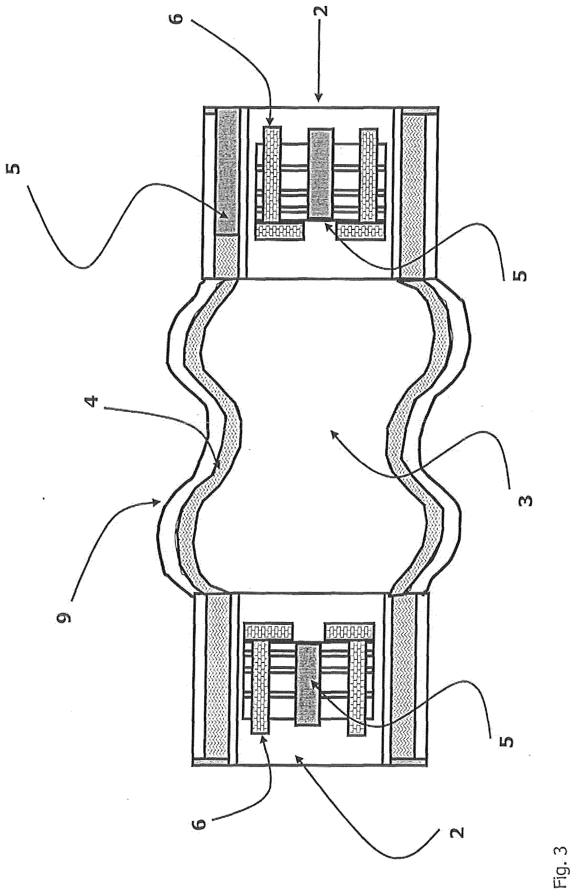

In Fig. 3 ist ein weiteres Ausführungsbeispiel dargestellt, welches auf eine flexible bzw. elastische Wandung 9 abzielt. Wie der Fig. entnommen werden kann, ist es auch bei einer derartigen Wandungsausführung möglich, eine Mehrfach- bzw. Doppelwandung mit einem befüllbaren Wandungszwischenraum 4 zu konstruieren.

Diese Ausführungsform des erfindungsgemäßen Beschickungsbehälters eignet sich vor allem zur Behandlung von Lebensmitteln bzw. Fleisch- und Wurstwaren, welche in Längsrichtung nicht gestaucht werden dürfen, um beispielsweise das Brechen von Tierknochen zu vermeiden. Der Hochdruck wird hierbei über die flexible Wandung 9 auf das Lebensmittel übertragen. Ein derartiger Beschickungsbehälter ist sowohl dazu geeignet verpackte Produkte als auch lose Ware zu behandeln.

Ansonsten weist dieser Beschickungsbehälter ebenfalls elektrische Kontakte 6, Temperiervorrichtungen 5 und Entnahmeöffnungen 2 auf.

### Bezugszeichenliste

- 1: Wandung
- 2: Entnahmeöffnung
- 3: Hohlraum
- 4: Wandungszwischenraum
- 5: Temperiervorrichtung
- 6: elektrischer Kontakt
- 7: Verdichtungskolben
- 8: Verschlussstopfen
- 9: flexible Wandung

## Patentansprüche

1. Beschickungsbehälter zur Verwendung in einer Hochdruckanlage, wobei der Beschickungsbehälter einen Hohlraum (3) zur Aufnahme von Lebensmitteln, eine Wandung (1) sowie eine Temperiervorrichtung (5) umfasst, wobei die Wandung (1) mehrwandig mit einem Wandungszwischenraum (4) ausgebildet ist, wobei in dem Wandungszwischenraum (4) ein Temperiermedium befindlich ist, **dadurch gekennzeichnet, dass** der Beschickungsbehälter mindestens einen elektrischen Kontakt zur Stromversorgung der Temperiervorrichtung aufweist, wobei der elektrische Kontakt so angeordnet ist, dass die im Hohlraum befindlichen Rohstoffe, Halbfertigwaren oder Fertigwaren lückenlos vom Strom durchflossen werden.

2. Beschickungsbehälter nach Anspruch 1,
**dadurch gekennzeichnet, dass**
das Temperiermedium Wasser und/oder Öl und/oder Salz und/oder Paraffin und/oder Sole und/oder PCM und/oder Salzlauge und/oder Glycerin und/oder flüssiger Stickstoff und/oder Ethanol und/oder Natriumacetat ist.

3. Beschickungsbehälter nach einem der vorangegangenen Ansprüche,
**dadurch gekennzeichnet, dass**
die Wandung (9) flexibel ausgeführt ist.

4. Beschickungsbehälter nach einem der vorangegangenen Ansprüche,
**dadurch gekennzeichnet, dass**
der Beschickungsbehälter mindestens einen Verdichtungskolben (7) aufweist.

5. Verfahren zur zeitgleichen Hochdruck- und Temperaturbehandlung eines Nahrungsmittels in einem Hochdruckkessel umfassend folgende Schritte:
- Befüllen eines Beschickungsbehälters nach einem der Ansprüche 1 bis 4 mit dem zu behandelnden Nahrungsmittel,
**gekennzeichnet durch**
- Vortemperieren des Nahrungsmittels **durch** Temperierung einer Wandung des Beschickungsbehälters **durch** in die Wandung eingebrachte und/oder an der Wandung angebrachten Temperiervorrichtung und
- Aufbau eines Hochdruckes im Hochdruckkessel und zeitgleiches Steuern der Temperatur des zu behandelnden Nahrungsmittels mittels der Temperiervorrichtung, wobei sich der mit dem zu behandelnden Nahrungsmittel befüllte Beschickungsbehälter in dem Hochdruckkessel befindet, wobei das zu behandelnde Nahrungsmittel im Beschickungsbehälter mittels ohmscher Erhitzung temperiert wird.

6. Verfahren zur zeitgleichen Hochdruck- und Temperaturbehandlung eines Nahrungsmittels in einem Hochdruckkessel nach Anspruch 5,
**dadurch gekennzeichnet, dass**
das zu behandelnde Nahrungsmittel im Beschickungsbehälter einer Elektroporation unterzogen wird.

7. Verfahren zur zeitgleichen Hochdruck- und Temperaturbehandlung eines Nahrungsmittels nach einem der Ansprüche 5 bis 6,
**dadurch gekennzeichnet, dass**
ein Druckabbau im Hochdruckkessel stufenweise erfolgt, wobei in einer ersten Phase des Druckabbaus das im Hochdruckkessel befindliche Druckmedium in einen Auffangbehälter geleitet wird.

8. Verfahren zur zeitgleichen Hochdruck- und Temperaturbehandlung eines Nahrungsmittels nach Anspruch 7,
**dadurch gekennzeichnet, dass**
das benötigte Volumen des Auffangbehälters über die Menge des während des Druckaufbaus im Hochdruckkessel zugeführten Druckmediums ermittelt wird und durch Zu- oder Abführung von Bestandsdruckmedium vor einer Entleerung des Hochdruckkessels eingestellt wird.

9. Verfahren nach Anspruch 7 oder 8,
**dadurch gekennzeichnet, dass**
das in den Auffangbehälter geleitete Druckmedium zur erneuten Befüllung des Hochdruckkessels und/oder zur Umwandlung in Druckluft und/oder zur Umwandlung in Strom dient.

10. Verwendung eines Beschickungsbehälters nach einem der Ansprüche 1 bis 4 als Kartusche zur keimfreien oder keimarmen Beschickung von Füllvorrichtungen und/oder Zerkleinerungsvorrichtungen mit hochdruck- und wärmebehandelten Halbfertigwaren.

11. Verwendung eines Beschickungsbehälters nach einem der Ansprüche 1 bis 4 als Kartusche zur keimfreien oder keimarmen Beschickung von Aufschnitt- oder Würfelvorrichtungen zur Produktion von SB- bzw. Vorratspackungen.

## Claims

1. A feed tank for use in a high-pressure system, wherein the feed tank comprises a cavity (3) for accommodating food items, a wall (1) and a temperature-control apparatus (5), wherein the wall (1) is formed in a multi-walled manner with a wall spacing (4) in between, wherein a temperature-controlling medium is disposed in the wall spacing (4), **characterized in that** the feed tank comprises at least one electrical contact for the power supply of the temperature-control apparatus, wherein the electrical contact is arranged in such a way that current flows completely through the raw materials, semifinished goods or finished goods disposed in the cavity.

2. A feed tank according to claim 1, **characterized in that** the temperature-controlling medium is water and/or oil and/or salt and/or paraffin and/or brine and/or PCM and/or salt solution and/or glycerine and/or liquid nitrogen and/or ethanol and/or sodium acetate.

3. A feed tank according to one of the preceding claims, **characterized in that** the wall (9) is of flexible design.

4. A feed tank according to one of the preceding claims, **characterized in that** the feed tank comprises at least one compression piston (7).

5. A method for the simultaneous high-pressure and temperature treatment of a foodstuff in a high-pressure vessel, comprising the following steps:
- filling a feed tank according to one of the claims 1 to 4 with the foodstuff to be treated,
**characterized by**
- pre-tempering the foodstuff by temperature-controlling a wall of the feed tank by a temperature-control apparatus introduced into the wall and/or attached to the wall, and
- building up a high pressure in the high-pressure vessel and simultaneously controlling the temperature of the foodstuff to be treated by means of the temperature-control apparatus, wherein the feed tank filled with the foodstuff to be treated is disposed in the high-pressure vessel, wherein the foodstuff to be treated is temperature-controlled in the feed tank by means of ohmic heating.

6. A method for the simultaneous high-pressure and temperature treatment of a foodstuff in a high-pressure vessel according to claim 5, **characterized in that** the foodstuff to be treated is subjected to electroporation in the feed tank.

7. A method for the simultaneous high-pressure and temperature treatment of a foodstuff according to one of the claims 5 to 6, **characterized in that** a pressure reduction in the high-pressure vessel occurs in a step-wise manner, wherein the pressure medium disposed in the high-pressure vessel is conducted in a first phase of the pressure reduction into a collecting container.

8. A method for the simultaneous high-pressure and temperature treatment of a foodstuff according to claim 7, **characterized in that** the required volume of the collecting container is determined by the amount of the pressure medium supplied during the pressure build-up in the high-pressure vessel and is adjusted by feeding or discharging stock pressure medium before discharging the high-pressure vessel.

9. A method according to claim 7 or 8, **characterized in that** the pressure medium conducted into the collecting container is used for renewed filling of the high-pressure vessel and/or conversion into compressed air and/or for conversion into current.

10. The use of a feed tank according to one of the claims 1 to 4 as a cartridge for the germ-free or low-germ feed of filling apparatuses and/or crushing apparatuses with high-pressure and heat-treated semifinished goods.

11. The use of a feed tank according to one of the claims 1 to 4 as a cartridge for the germ-free or low-germ feed of a slicing or cubing apparatuses for the production of SB or storage packages.

## Revendications

1. Récipient de chargement pour l'utilisation dans une installation à haute pression, dans laquelle le récipient de chargement inclut une cavité (3) pour la réception de produits alimentaires, une paroi (1) ainsi qu'un dispositif de températion (5),
dans lequel la paroi (1) est réalisée à plusieurs cloisons avec un espace intermédiaire de paroi (4), et un milieu de températion se trouve dans l'espace intermédiaire de paroi (4),
**caractérisé en ce que**
le récipient de chargement comprend au moins un contact électrique pour l'alimentation électrique du dispositif de températion, le contact électrique étant agencé de telle façon que des matières brutes, des produits semi-finis ou des produits finis qui se trouvent dans la cavité sont traversés sans lacune par le courant.

2. Récipient de chargement selon la revendication 1,
**caractérisé en ce que** le milieu de températion est de l'eau et/ou de l'huile et/ou un sel et/ou de la paraffine et/ou une saumure et/ou du PCM et/ou une solution saline et/ou de la glycérine et/ou de l'azote liquide et/ou de l'éthanol et/ou de l'acétate de sodium.

3. Récipient de chargement selon l'une des revendications précédentes, **caractérisé en ce que** la paroi (9) est réalisée flexible.

4. Récipient de chargement selon l'une des revendications précédentes, **caractérisé en ce que** le récipient de chargement comprend au moins un piston de compression (7).

5. Procédé pour le traitement simultané sous haute pression et en température d'un produit alimentaire dans une enceinte à haute pression, incluant les étapes suivantes consistant à :
- remplir un récipient de chargement selon l'une des revendications 1 à 4 avec le produit alimentaire à traiter,
**caractérisé par** les étapes suivantes
- températion préalable du produit alimentaire par températion d'une paroi du récipient de chargement au moyen d'un dispositif de températion intégré dans la paroi et/ou rapporté sur la paroi, et
- établissement d'une haute pression dans l'enceinte à haute pression et commande simultanée de la température du produit alimentaire à traiter au moyen du dispositif de températion, dans lequel le récipient de chargement rempli du produit alimentaire à traiter se trouve dans l'enceinte à haute pression, et le produit alimentaire à traiter est tempéré dans le récipient de chargement au moyen d'un échauffement ohmique.

6. Procédé pour le traitement simultané sous haute pression et en température d'un produit alimentaire dans une enceinte haute pression selon la revendication 5,
**caractérisé en ce que** le produit alimentaire à traiter est soumis à une électroporation dans le récipient de chargement.

7. Procédé pour le traitement simultané sous haute pression et en température d'un produit alimentaire selon l'une des revendications 5 à 6, **caractérisé en ce qu'**un établissement de la pression dans l'enceinte à haute pression a lieu par étapes, de sorte que dans une première phase de l'établissement de pression le milieu sous pression qui se trouve dans l'enceinte à haute pression est amené dans un récipient de collecte.

8. Procédé pour le traitement simultané sous haute pression et en température d'un produit alimentaire selon la revendication 7,
**caractérisé en ce que** le volume nécessaire du récipient de collecte est déterminé au moyen de la quantité du fluide sous pression alimenté dans le récipient à haute pression pendant l'établissement de pression, et est réglé par amenée ou par évacuation d'un milieu sous pression en réserve avant de vider l'enceinte à haute pression.

9. Procédé selon la revendication 7 ou 8,
**caractérisé en ce que** le milieu sous pression amené dans le récipient de collecte sert au nouveau remplissage de l'enceinte à haute pression et/ou à la conversion en air comprimé et/ou à la conversion en courant.

10. Utilisation d'un récipient de chargement selon l'une des revendications 1 à 4 à titre de cartouche pour le chargement en l'absence de germes ou avec peu de germes de dispositifs de remplissage et/ou de dispositifs de broyage avec des produits semi-finis traités sous haute pression et en température.

11. Utilisation d'un récipient de chargement selon l'une des revendications 1 à 4 à titre de cartouche pour le chargement en l'absence de germes ou avec peu de germes de dispositifs de découpe et/ou de formation de dés pour la production d'emballages en self-service ou d'emballages de réserve.
